# EUROPEAN PATENT APPLICATION

(11) **EP 3 890 139 A1**
(43) Date of publication of application: **06.10.2021**
(21) Application number: 20020144.0
(22) Date of filing: 31.03.2020
(51) Int. Cl.: H02J 3/38, H02J 3/28

(54) **HYBRID ENERGY CONVERTING SYSTEM**

(71) Applicant: Smulders, Antonius Hugo Maria, 56400 Brech (FR)
(72) Inventor: Smulders, Antonius Hugo Maria, 56400 Brech (FR)

(57) **Abstract**

The present invention relates to an energy converting system comprising a rotor with blades (11), an electric generator (1) and an electricity converting module (2) for adapting the electric generator's output to an electricity distribution network (3).

According to the invention, this energy converting system further comprises a hydrogen producing unit (6), and a controlling unit (9) for controlling the interactions between the electric generator (1), the hydrogen producing unit (6) and the electricity distribution network (3).

The invention enables to make an efficient use of the energy converting system's producing resources even in circumstances where the electricity distribution network (3) is unable to receive additional energy from said energy converting system.

## Description

### 1. Field of the invention

The present invention relates to an energy converting system comprising a rotor with blades, an electric generator and an electricity converting module for adapting the electric generator's output to an electricity distribution network.

### 2. State of the Art

Many known energy converting systems include a wind turbine comprising a rotor equipped with blades, a gearbox for speed and torque conversion, a generator and an electricity converting module, which are designed to deliver electrical energy to grids or micro-grids of electricity distribution networks, or to deliver mechanical or electrical energy off-grid or to an independent micro-grid. The inventor has observed that the current design of wind turbines does not allow, without significant changes, to use the electrical energy for more than one purpose. Furthermore, the inventor has noted that, in the current state of the art, there is no efficient electric energy storage solution available for storing energy produced by a wind turbine in excess of the capacities of its associated local grid. Consequently, in such a situation, the wind turbine has to be shut off, which entails a considerable waste of energy producing resources.

### 3. Aims and summary of the invention

The invention aims at solving these problems by enabling an energy converting system to keep on making an efficient use of its energy producing resources even in circumstances where the electricity distribution network is unable to receive additional energy from said energy converting system.

Indeed, according to the invention, an energy converting system as described in the opening paragraph further comprises a hydrogen producing unit, and a controlling unit for controlling the interactions between the electric generator, the hydrogen producing unit and the electricity distribution network.

The energy converting system according to the invention thus provides a known, single-functional wind turbine, with an additional functionality enabling said turbine to produce hydrogen in chosen circumstances. Such a hybrid (bi-functional) energy converter can be used alternatively or simultaneously for electrical grid connection, and for local hydrogen production. The advantage of this bi-functional energy converting system is that during the moments when the electricity distribution network cannot absorb the wind energy converted from the wind by the system's electric generator, the energy converting system is immediately available for generating hydrogen to be immediately used, or stored locally for later use, or transported, without requiring any redesign and rewiring of the electrical parts included in the energy converting system.

For such instantaneous switching functions, the energy converting system according to the invention is equipped, as compared to a single function turbine, with additional hardware and software which are available or feasible in the current state of the art.

In a particular embodiment of the invention, the electricity converting module includes adaptation means for adapting frequency, voltage, phase sequence and power quality of the electrical output of a stator included in the generator.

Such adaptation means enable to ensure that the electrical output of the energy converting system is adapted for and accepted by the electricity distribution network.

In an advantageous embodiment of the invention, in which the electricity converting module comprises a stator-side converter and a grid-side converter, which are connected by a DC electrical link designed to transfer a direct current between the stator-side converter and the grid-side converter, the DC electrical link is equipped with parallel connections to supply the hydrogen producing unit with a DC voltage and a DC current to be used to produce hydrogen through electrolysis.

The grid-side converter has its output side connected to the electricity distribution network. The electrical output of the total system rotor-generator-electricity converting module described hereinbefore goes entirely, minus conversion losses, onto the electricity distribution network when the hydrogen producing unit is switched off or in stand-by mode.

When the hydrogen producing unit is operating, only a part, or no part at all of the electrical output of the total system is driven towards the electricity distribution network.

When the grid-side converter is switched off or in standby mode, the electrical output of the total system rotor-generator-electricity converting module supplies, minus conversion losses, a DC voltage and a DC current to a DC input side of the hydrogen producing unit.

Electrical and electronic equipment supports the correct functioning and correct power quality for the necessities of both the electricity distribution network and the hydrogen producing unit. The switching on and off, entirely or partly, of the grid-side converter and/or of the hydrogen producing unit is done by the controlling unit which may be operated manually or automatically.

Using the DC link of the electricity converting module for supplying the DC input side of the hydrogen producing unit is advantageous in that the invention is able to operate with electricity distribution networks configured for both 50 and 60Hz.

The invention is able to deliver electrical energy to grids or micro-grids of distribution networks, or to deliver electrical energy off-grid or to an isolated micro-grid.

According to an advantageous variant of the invention described above, the grid-side converter includes switchable means for directing electricity provided by the electricity distribution network towards the hydrogen producing unit.

This variant of the invention enables the electricity distribution network, through a specific control of the grid-side converter, to supply electricity to the hydrogen producing unit in situations when there is not enough natural energy for the electric generator to neither supply electricity to the electricity distribution network, nor supply the hydrogen producing unit.

This variant thus enables to relieve the electrical load of the electricity distribution system when desired, and, if deployed on a larger scale, to help regulating the distribution of the load throughout the whole electricity distribution system.

According to a preferred embodiment of the invention, the electric generator is an a-synchronous squirrel cage generator and the electricity converting module is of the "full converter" type, of which the stator-side converter has an input directly connected to the generator's stator and an output connected to the DC link.

Although the electric generator may also be implemented, with some electrical and control modifications, in the form of a DC generator, a permanent-magnet generator, an electro-magnet generator or a double-fed induction generator, the above-described embodiment offers a better efficiency since it enables the full power of the electric generator to be available on the DC link for the hydrogen producing unit, minus conversion losses.

In various further embodiments of the invention:
- The hydrogen producing unit can be located indifferently inside or outside a tower supporting a wind turbine or inside or outside any other installation housing another type of naturally powered turbine.
- The hydrogen producing unit can be equipped with or without a storage tank for storing hydrogen produced by the hydrogen producing unit, in a compressed or an uncompressed form.
- The connection of the grid-side converter to the electricity distribution system can be direct, or through the use of a voltage transformer.
- The stator-side converter together with the grid-side converter and together with the DC link can be considered as one converter unit.
- The energy converting system can include a turbine which can be designed with or without a gearbox for speed and torque conversion either by adapting the speed of the rotor, or by adapting the electrical configuration of the electric generator.
- The energy converting system according to the invention can be connected either to a local grid of a distribution network or to an isolated micro-grid.
- The energy converting system can include a water turbine driving an electric generator and intended to be powered by water displacements.

### 4. Brief description of the drawing

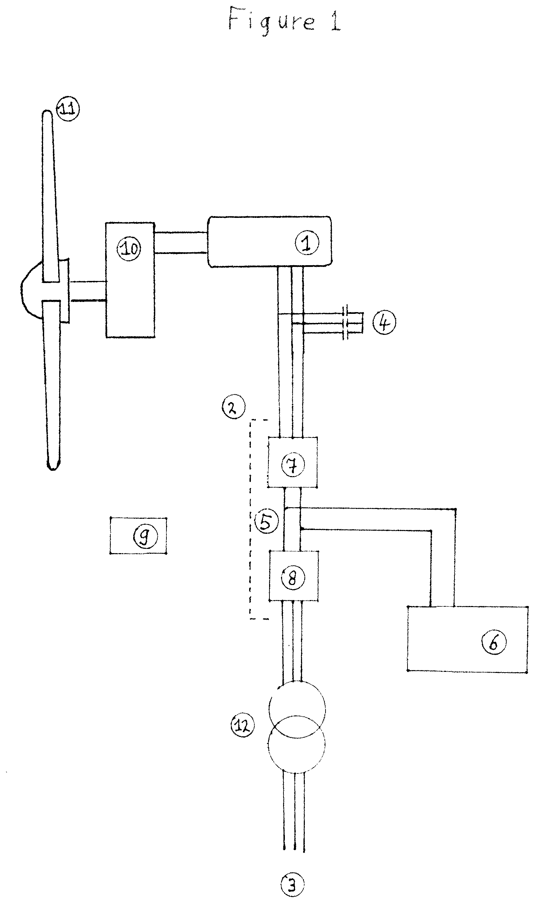

**Fig.1** is a schematic view of an energy converting system according to a specific embodiment of the invention.

### 5. Detailed description of the invention

**Fig.1** shows a hybrid energy converting system according to the invention, including a rotor with blades (11), a gearbox (10), an electric generator (1) and an electricity converting module (2) for adapting the electric generator's output to an electricity distribution network (3).

In other embodiments of the invention, the rotor with blades (11) and gearbox (10) may be replaced by a water turbine connected to the electric generator (1) and intended to be powered by water currents.

According to the invention, this energy converting system further comprises a hydrogen producing unit (6), and a controlling unit (9) for controlling the interactions between the electric generator (1), the hydrogen producing unit (6) and the electricity distribution network (3).

The controlling unit (9) may also be used for controlling the rotation speed of the rotor (11) and all auxiliary functions of the energy converter.

In this embodiment of the invention, the electric generator (1) is an a-synchronous squirrel cage induction generator and the electricity converting module (2) is of the "full converter" type, meaning that the entire production of the generator coming from the generator's stator is rectified inside the converting module (2).

Capacitors (4) are installed parallel to the stator output circuit of the a-synchronous generator (1).

The electricity converting module (2) comprises a stator-side converter (7) and a grid-side converter (8), which are connected by a DC electrical link designed to transfer a direct current between the stator-side converter (7) and the grid-side converter (8).

The DC electrical link is equipped with parallel connections (5) to supply the hydrogen producing unit (6) with a DC voltage and a DC current to be used to produce hydrogen through electrolysis.

When the energy converting system is in operation but its converting module's output not connected to the electricity distribution network (3), the connections (5) at the DC link will supply a DC electrical energy for generating hydrogen in the hydrogen producing unit (6). This hydrogen can be used immediately or stored in a storage tank in a compressed or uncompressed form.

In that case, the rectifying part of the stator-side converter (7), connected to the stator of the turbine's generator, will be operational. The grid-side converter (8) of the converting module (2) connected to the electricity distribution network (3) can be switched off or put into stand-by mode.

If the energy converting system is equipped with a permanent magnet (PM) generator or an electromagnet generator and a full converter of which the electrical energy output is connected to the electricity distribution network (3), the same text as above applies, except that the use of capacitors on the stator will not be necessary.

If the energy converting system is equipped with a Double Fed Induction Generator (DFIG), the same bi-functionality is achieved by installing capacitors on the stator circuit of the turbine's generator, and by connecting a rectifier to the stator output circuit of the turbine's generator. The rotor of this DFIG must then be supplied with a voltage during operation, or short-circuited. The hydrogen producing unit as well as its optional storage device, can thus be supplied by the rectifier, which is itself supplied by the turbine's generator stator, during the moments when the turbine's generator stator is disconnected from the electricity distribution network (3).

If the energy converting system is equipped with a DC generator connected to an inverter for grid connection, the bi-functionality is achieved by installing connections parallel to the generator's DC output circuit. The inverter can be switched off or put in stand-by mode when this energy converting system is in hydrogen production mode.

The controlling unit (9) will switch over automatically or manually from one function to another, by using an algorithm based on information from a computer about the optimum use of each of the functions. Thus the owner or operator of the energy converting system, can also decide voluntarily if he or she wants to produce hydrogen instead of delivering the electrical energy to the electricity distribution system (3), not only at times when the electricity distribution system (3) is not able to absorb the hybrid turbine's electrical output.

The system can be used on hybrid turbines with or without a mechanical gearbox (10) between the rotor blades (11) and the generator (1).

The electricity distribution system connection can be, depending on the voltage level, with or without the use of a voltage transformer (12).

## Claims

1. An energy converting system comprising a rotor with blades (11), an electric generator (1) and an electricity converting module (2) for adapting the electric generator's output to an electricity distribution network (3), **characterized in that** it further comprises a hydrogen producing unit (6), and a controlling unit (9) for controlling the interactions between the electric generator (1), the hydrogen producing unit (6) and the electricity distribution network (3).

2. An energy converting system according to claim 1, wherein the electricity converting module (2) includes means for adapting frequency, voltage, phase sequence and power quality of the electrical output of a stator included in the generator so that the electrical output of the energy converting system is adapted for and accepted by the electricity distribution network (3).

3. An energy converting system according to claim 2, wherein, the electricity converting module (2) comprising a stator-side converter (7) and a grid-side converter (8), which are connected by a DC electrical link designed to transfer a direct current between the stator-side converter (7) and the grid-side converter (8), the DC electrical link is equipped with parallel connections (5) to supply the hydrogen producing unit (6) with a DC voltage and a DC current.

4. An energy converting system according to claim 3, wherein the grid-side converter (7) includes switchable means for directing electricity provided by the electricity distribution network towards the hydrogen producing unit.

5. An energy converting system according to claims 3 or 4, wherein the electric generator (1) is an a-synchronous squirrel cage generator and the electricity converting module (2) is of the "full converter" type, of which the stator-side converter has an input directly connected to the generator's stator and an output connected to the DC link.
